# EUROPEAN PATENT SPECIFICATION

(11) **EP 4 591 592 B1**
(45) Date of publication and mention of the grant of the patent: **30.09.2026**
(21) Application number: 22836013.7
(22) Date of filing: 21.11.2022
(51) Int. Cl.: H04W 4/02, H04L 69/18

(54) **APPLICATION CONTROL OVER RANGING**
ANWENDUNGSSTEUERUNG ÜBER ENTFERNUNGSMESSUNG
CONTRÔLE D'APPLICATION SUR TÉLÉMÉTRIE

(43) Date of publication of application: 30.07.2025
(73) Proprietor: GOOGLE LLC, Mountain View CA 94043 (US)
(72) Inventor: RAHMATI, Ahmad, Mountain View, CA 94043 (US); PIUS, Roshan, Mountain View, CA 94043 (US); TULI, Amol, Mountain View, CA 94043 (US)
(74) Representative: Chettle, John Edward
(86) International application number: PCT/US2022/080213
(87) International publication number: WO 2024/112348

(56) References cited:
- EP-A1- 4 060 380
- US-A1- 2008 246 651
- US-A1- 2020 106 877

## Description

### BACKGROUND

An electronic device may be equipped with ranging technology that enables the device to determine how far away from the device another device is located, and perhaps where the other device is positioned (e.g., an orientation of the distance). This ranging technology may help facilitate various useful features.

For example, the ranging may help facilitate person-to-person meetups, such as helping to guide users toward each other. More particularly, a first user's device may apply ranging to determine how far away a second user's device is located and to determine an angle at which the second user's device is located in relation to an orientation of the first user's device. Based on the results of that ranging, the first user's device may then present on a display, for the first user to see, a graphical depiction of distance and direction to the second user's device, and the first user may then conveniently use that graphical depiction as a basis to move closer to the second user.

As another example, the ranging may help facilitate unlocking of a secure system. For instance, a user's device may include a digital key that enables unlocking of a secure system such as a car or a house and that is configured to unlock the secure system only if and when the secure system is close enough to the user's device, such as that the secure system is positioned within a predefined threshold short distance from the user's device. In that case, the user's device may apply ranging to determine how close the secure system is to the user's device and, responsive to determining from that ranging that the secure system is close enough to user's device, may then allow use of the digital key to unlock the secure system.

Other examples are possible as well.

Prior art document US 2008/246651 A1 discloses a solution where a ranging manager is implemented as an additional module in the L2CAP protocol layer.

### OVERVIEW

A representative device may be equipped with multiple ranging mechanisms that the device could use to carry out ranging between the device and a given other device. For instance, the device may include multiple radios, circuitry, and/or other modules, each configured to operate according to a respective air-interface protocol that the other device may use as well. Further, the device may include one or more antennas that the device may use as a basis to engage in ranging using a given such protocol.

Such a device may include an operating system (e.g., Android, chromeOS, Windows, or Linux, among other possibilities) and may run one or more applications configured to interact with the operating system to trigger ranging. For instance, the operating system may expose an application programming interface (API) that defines a ranging-request usable to trigger ranging keyed to an identifier associated with the other device. An application on the device may thus issue a ranging-request **API** call to the operating system, and the operating system may respond to that **API** call by engaging in the requested ranging. **In** response to the application's ranging request, for example, the operating system may first establish a data connection with the other device, exchange ranging capabilities and/or other parameters with the other device through that data connection, and then select and invoke a supported ranging mechanism to determine the distance and/or relative angle between the device and the other device.

This process may insulate the application from knowledge of the underlying ranging mechanism that the operating system invokes to carry out the requested ranging. For instance, the **API** call may not specify which ranging mechanism the operating system should invoke, the operating system may not inform the application which ranging mechanism the operating system invokes, and the application may be unaware of which ranging mechanism the operating system invokes.

However, the **API** call may enable the application to exert some control over the selection of ranging mechanisms by specifying one or more operational characteristics that the application requests the ranging to have. For instance, the **API** call may allow the application to specify as arguments not only an identity associated with the other device, but also one or more operational characteristics that the application requests the ranging to have. Examples of these operational characteristics may include, without limitation, (i) power budget of the ranging, (ii) security of the ranging, (iii) accuracy of the ranging, and (iv) latency of the ranging. Given the application's specification of one or more such operational characteristics that the application requests the ranging to have, the operating system may then select a ranging mechanism based at least on a determination that the selected ranging mechanism would have the one or more operational characteristics. For instance, the operating system may select a ranging mechanism based on a determination that the selected ranging mechanism would meet or exceed the specified operational characteristics.

Enabling the application to exert this type of control over the operating system's selection of a ranging mechanism may usefully allow selection and use of a ranging mechanism that accounts for one or more needs, desires, or contexts of the application.

Accordingly, in one respect, disclosed is a method for application control over ranging. The method includes receiving into an operating system of a device, from an application on the device, a ranging request, the ranging request requesting ranging between the device and another device, and the ranging request specifying one or more operational characteristics that the application requests the ranging to have. **In** addition, the method includes, based at least on the one or more operational characteristics requested by the application, the operating system selecting a ranging mechanism from among a plurality of available ranging mechanisms. Further, the method includes, based at least on the selecting, the operating system causing the device to implement the selected ranging mechanism in response to the ranging request.

**In** another respect, disclosed is a device. The device includes a processor, non-transitory data storage, and an operating system stored in the non-transitory data storage and executable by the processor and defining program instructions executable by the processor to carry out operations. The operations include receiving, from an application on the device, a ranging request, the ranging request requesting ranging between the device and another device, and the ranging request specifying one or more operational characteristics that the application requests the ranging to have. **In** addition, the operations include selecting, based at least on the one or more operational characteristics requested by the application, a ranging mechanism from among a plurality of available ranging mechanisms. Further, the operations include causing, based at least on the selecting, the device to implement the selected ranging mechanism in response to the ranging request.

**In** yet another respect, disclosed is a non-transitory computer-readable medium having stored thereon an operating system defining instructions executable by a processor of a device to cause the device to carry out operations such as those described above.

**In** still another respect, disclosed is a system that includes various means for carrying out each of the operations described herein.

These as well as other aspects, advantages, and alternatives will become apparent to those of ordinary skill in the art by reading the following detailed description, with reference where appropriate to the accompanying drawings. Further, it should be understood that the descriptions provided in this summary and below are intended to illustrate the invention by way of example only and not by way of limitation.

### BRIEF DESCRIPTION OF THE DRAWINGS

Figure 1 is an illustration of example distance and angle measurements as between two example devices.
Figure 2 is a simplified block diagram of an example device.
Figure 3 is an example illustration of mapping data for correlating one or more application-requested operational characteristics with a ranging mechanism to invoke in response to a ranging request.
Figure 4 is a flow chart depicting an example method.

### DETAILED DESCRIPTION

Example methods, devices, and systems are described herein. It should be understood, however, that any disclosed embodiment is not necessarily to be construed as preferred or advantageous over other embodiments unless stated as such. Further, it should be understood that variations from the specific arrangements and processes disclosed are possible. For instance, various disclosed entities, components, connections, operations, and other elements could be added, omitted, distributed, replicated, re-located, re-ordered, combined, or changed in other ways. In addition, it will be understood that various disclosed technical operations could be implemented at least in part by a processing unit programmed to carry out the operations or to cause one or more other entities to carry out the operations.

### Example Ranging Between Devices

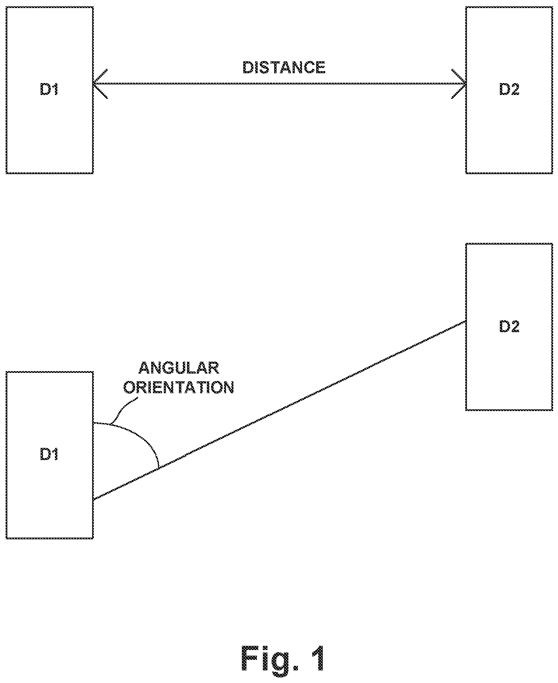

As noted above, ranging between devices may involve determining a distance between the devices and/or determining an angular orientation of one of the devices in relation to the other. For instance, given two devices D1 and D2, ranging could involve determining a distance between the physical positions of D1 and D2 and/or determining an angular orientation of one of the devices in a Cartesian or polar coordinate system defined in relation to a physical position and orientation of the other device. Figure 1 generally illustrates examples of distance and angular orientation between devices D1 and D2.

The present disclosure assumes that a given device D1 will engage in ranging between it and another device D2. In this arrangement, at least one of these two devices may be in motion, and the other device may be in motion or may be stationary. For instance, D1 may be in motion and D2 may be stationary, so that D1 moves in relation to D2. Alternatively, D1 may be stationary and D2 may be in motion, so that D2 moves in relation to D1. In either case, D1 may engage in ranging to determine the distance between D1 and D2 and/or the angular orientation of D2 in relation to D1.

Devices D1 and D2 could take any of a variety of forms. Without limitation, examples include cell phones, tablet computers, laptop computers, gaming devices, wearable devices, package-tracking devices, livestock-tracking devices, appliances, wirelessly equipped key fobs, and Internet-of-Things (IoT) or other machine-to-machine (M2M) devices.

Device D1 may have a user interface, such as a display screen or other interface, through which it may be configured to present results of its ranging. For instance, D1 may be configured to present on a display screen a numerical value or other indication of its determined distance from D2. Alternatively or additionally, D1 may be configured to present on a display screen an arrow determined to point toward D2, which may enable a user of D1 to approach the location of D2 if applicable. Alternatively, the results of ranging could be provided to another entity for presentation and/or processing.

Further, device D1 may conduct ranging repeatedly. For instance, D1 may periodically determine its distance from D2 and/or the angle of orientation of D2 in relation to D1 and may present the results of this ranging. Further, D1 may vary the periodicity and/or form of this ranging, such as by ranging more frequently or with greater granularity as the distance between D1 and D2 decreases (i.e., as D1 moves closer to D2, and/or as D2 moves closer to D1).

### Examples of Ranging Mechanisms

As noted above, various ranging mechanisms may be possible. These ranging mechanisms may make use of wireless signaling communication between D1 and D2 and/or may involve communication with one or more centralized positioning systems, among other possibilities. Further, each ranging mechanism may have respective operational characteristics, such as respective power budget, respective security, respective accuracy, respective latency, and respective capabilities in terms of establishing distance and/or establishing angular orientation, among other possibilities.

For some ranging mechanisms, D1 and D2 may initially enter into a data communication session with each other (e.g., through peer-to-peer wireless communication, and/or through a WiFi, cellular, or other network communication). Through this data communication session, D1 and D2 may then exchange data to facilitate computation of distance and/or angular orientation. For instance, D1 and D2 may exchange data about the ranging mechanism that they will use and may reach agreement on a wireless channel through which they may engage in ranging signaling with each other. Further, D1 and D2 may exchange information about wireless signaling between each other.

Ranging mechanisms that determine the distance between D1 and D2 based on wireless signaling between D1 and D2 may take various forms, making use of signal strength and/or signal propagation time between D1 and D2, and/or making use of the respective positions of D1 and D2, among other possibilities.

As to distance determination based on signal strength, for instance, if D2 broadcasts a signal that is discernible by D1, then D1 may receive that signal, measure a receive strength of the signal as a received signal strength indicator (RSSI) value, and translate that RSSI value to a distance between the devices. D1 may use information about the power level of D2's broadcast and/or knowledge of relative distances corresponding with various levels of RSSI as a basis to translate RSSI to distance. For instance, if an RSSI value of -50 decibels per milliwatt (dBm) represents a distance of 1 meter (1m) between the devices, and if each -6 dBm decrease in RSSI represents a doubling of distance between the devices, then D1 may deem an RSSI value of -56 dBm to represent a distance of 2m between then devices, D1 may deem an RSSI of -72 dBm to represent a distance of 4m between the devices, and so forth. Alternatively, if D1 broadcasts a signal discernable by D2, D2 may measure the RSSI of that signal and report the measured RSSI to D1, which D1 may then translate to a distance between the devices, or D2 may translate the RSSI to a distance value and report that distance value to D1.

This or other ranging mechanisms based on signal strength may be relatively simple and quick, with relatively low power budget. However, they may suffer from errors and inaccuracy due to signal reflections and interference from obstacles, among other issues. Further, this type of ranging by itself would not allow for determination of angular orientation between devices.

Distance determination based on signal propagation time, on the other hand, may involve wirelessly transmitting one or more pulses (e.g., frames) between D1 and D2, measuring time-of-flight of each such transmission, and using the speed of light as a basis to translate the measured time-of-flight to a measure of distance between the devices. For instance, ranging could involve computing a time-of-flight respectively of each of multiple such pulses transmitted from D1 to D2 in quick succession, computing an average of those times-of-flight, and translating the computed average time-of-flight to a determined distance between the devices. Alternatively, ranging could involve computing time-of-flight respectively of each such pulse, translating the computed times-of-flight to distance values, and computing an average of the computed distance values as a determined distance between the devices.

By way of example, D1 could transmit one or more timestamped pulses to D2, and, for each pulse, D2 could record its time of receipt and compute and report back to D1 the time-of-flight as the difference between the transmit time and receive time. Considering the speed of light, D1 could then translate D2's computed time-of-flight to a distance between D1 and D2, possibly accounting for any processing, encoding, and/or other non-distance delay. Or for each pulse, D2 could record its time of receipt, compute the time-of-flight, translate the computed time-of-flight to a distance between D1 and D2, and report that computed distance to D1. Further, such computations could be averaged over a set of such pulses.

Alternatively, in a single-sided two-way ranging process, D1 could transmit one or more timestamped poll pulses to D2 and, for each poll pulse, D2 could transmit a corresponding response pulse to D1, and D1 could compute a round-trip time (RTT) (e.g., round-trip delay (RTD)) as the total time from D1's transmission of a poll pulse to D1's receipt of the response pulse (likewise possibly accounting for any processing, encoding, and/or other non-distance delay). D1 could then treat half of that RTT as a measure of time-of- flight between D1 and D2 and could translate that time-of-flight to a distance between D1 and D2.

Still alternatively, in a double-sided two-way ranging process, D1 and D2 may perform a combination of two single-sided two-way ranging processes. For instance, D1 could transmit one or more timestamped poll pulses to D2 and, for each poll pulse, D2 could transmit to D1 both a corresponding response pulse and its own timestamped poll pulse to which D1 could respond to D2 with its own corresponding response pulse. For each such exchange, D1 could then compute a RTT for D1's poll to D2 and D2's corresponding response to D1, and D2 could compute and report to D1 a RTT for D2's poll to D1 and D1's corresponding response to D2. D1 could then use those two RTT computations in combination (likewise accounting for any processing, encoding, and/or other non-distance delay), as a basis to compute time-of-flight between D1 and D2 and could translate that time-of-flight to a distance between D1 and D2.

These or other ranging mechanisms based on signal propagation time may be more accurate than ranging based on signal strength, but may also require closely synchronized clocks, which may or may not be possible in some situations. Further, they may have increased power budget due to their need for additional wireless communication and their additional processing. In addition, these types of ranging by themselves may also not allow for determination of angular orientation between devices.

Distance determination based on respective positions of D1 and D2, on the other hand, may involve determining the respective positions of D1 and D2 in a common coordinate system and computing a difference between those determined positions as a determined distance between the devices.

Determining the respective positions of the devices D1 and D2 in a common coordinate system could itself take various forms. For example, either or each device may make use of a global navigation satellite system (GNSS) such as the Global Positioning System (GPS), using a GNSS receiver to receive timestamped signals from each of multiple GNSS satellites at known orbit locations, and triangulating or trilaterating based on those signals to determine its geographic location. As another example, either or each device may make use of cellular, WiFi, or other such broadcast signals, using a receiver to receive signals from multiple base stations or access nodes at known geographic positions, and triangulating or trilaterating based on those signals to determine its geographic location.

If each device determines its respective position, then one device could report its determined position to the other device, and the other device could compare that position with its own determined position to compute a distance between the devices. For instance, D2 could report to D1 a determined position of D2, and D1 could then compute the distance between D1 and D2 as the difference between the determined position of D1 and the determined position of D2. This form of ranging could also facilitate determining angular orientation of D1 in relation to D1.

This or other ranging mechanisms that involve determining and comparing the respective positions of D1 and D2 may be even more accurate than some other ranging mechanisms but may have additionally increased power budgets and latency, due to their use of positioning mechanisms such as GNSS or cellular radio communication for instance. On the other hand, these types of ranging may support not only distance determination but also angular orientation determination.

Other ranging mechanisms that determine the angular orientation of D2 in relation to D1 may take various forms as well, also making use of triangulation, trilateration, and/or other technologies. For instance, angular orientation of D2 in relation to D1 could be determined using a phase-difference-of-arrival technique.

The angle at which D2 is positioned in relation to D1 could be measured in relation to a defined plane at D1. One way to measure this angle is with a multi-antenna array (e.g., a linear antenna array) at D1, with the antennas arranged in a plane (e.g., spaced apart from each other by at least ½ of the carrier wavelength), and at issue being the phase difference of a given signal as received at the various antennas of the plane. Namely, as D1 receives a pulse signal from D2, D1 could determine the phase of the signal as received respectively at each antenna and, based on a comparison of those phases, could determine a direction of arrival (e.g., from 0 to 180 degrees) of the signal in relation to the antenna-array plane. If D1 determines that the phase of the signal is the same at each antenna, then D1 could conclude that D2 is at an orientation of 90 degrees from the plane. Whereas, if D1 determines that there is a difference between the phases at the various antennas, then D1 could use that phase difference as a basis to compute an angle of arrival of the signal from D2 and thus the orientation of D2 in relation to the plane. Given a determination of this orientation of D2, and given a determination of the distance between D1 and D2, D1 could then further determine the position of D2 in a Cartesian or polar coordinate system defined in relation to D1.

This or other such ranging mechanisms that determine the angle of orientation of D2 in relation to D1 may be relatively quick and have relatively low power budgets as well. Further, the level of accuracy of this type of ranging may depend on factors such as the carrier frequency used for signaling for instance and/or the design of the antenna array, for instance. Further, while this type of ranging mechanism may not itself determine distance, it could be combined with one or more other mechanisms, to facilitate both distance and angular orientation determination. For instance, distance could be computed based on signal strength and/or signal delay while also measuring angle based on phase difference.

As noted above, ranging to determine the distance between D1 and D2 and/or the angular orientation of D2 in relation to D1 may also or alternatively involve communication with a centralized positioning system. By way of example, D1 may engage in network communication with a system that is configured to compute or otherwise determine the respective positions of D1 and D2 in a common coordinate system and to report associated ranging information to D1. For instance, D1 may transmit through a WiFi, cellular, or other connection to the system a request for ranging between D1 and D2. Upon authorizing D1, the system may then interwork with both D1 and D2 to determine their respective positions, possibly through use of GNSS or other techniques. The system may then responsively report to D1 these determined positions, and D1 may compare the positions to determine distance and/or angular orientation, or the system may determine and report to D1 the distance and/or angular orientation.

This type of ranging may be highly accurate, particularly if it involves use of GNSS or the like. However, this type of ranging may also have relatively high latency and power budget, due to its added communication with the centralized system and perhaps its use of GNSS and/or one or more other such technologies.

The example ranging mechanisms discussed above, among other examples, may vary in their operational characteristics based on their particular implementation.

For instance, operational characteristics of ranging mechanisms may differ based on the air-interface protocols or wireless-communication technologies used for the ranging. By way of example, ranging conducted with some forms of WiFi or BLUETOOTH signaling may have relatively low accuracy, while ranging conducted with Ultra Wideband (UWB) signaling, which uses very narrow pulses and operates at very high frequency and with a wide range of spectrum, may have much higher accuracy. Further, ranging conducted with some forms of BLUETOOTH (e.g., BLUETOOTH Low Energy (BLE), with RSSI measurements) may have lower accuracy than ranging conducted with other forms of BLUETOOTH (e.g., BLUETOOTH High Accuracy Distance Measurement (HADM)). Still further, ranging conducted through interaction with a centralized positioning system may be highly accurate.

Still further, these or other ranging mechanisms may differ in their level of security, such as their ability to help prevent relay or man-in-the-middle attacks (e.g. spoofing). For instance, some forms of UWB-based ranging may provide very high levels of security compared with WiFi or BLUETOOTH-based ranging. Further, ranging conducted through interaction with a secure centralized positioning system such as a cellular carrier's mobile location system or the like may also be highly secure.

In addition, some ranging mechanisms may differ in their power budgets based on their levels of security, accuracy, and/or other operational characteristics. For instance, a type of ranging that has a variable level of security may use more energy when operating with a higher level of security than when operating with a lower level of security. Likewise, a type of ranging that has a variable level of accuracy may use more energy when operating with a higher level of accuracy than when operating with a lower level of accuracy.

### Example Application-Based Control Over Ranging

As noted above, a device's operating system could be configured to allow applications to exert some control over the ranging process by enabling the applications to request one or more operational characteristics that the application would like the ranging to have. For instance, the operating system could expose an API through which any given application on the device could request ranging and could specify one or more requested operational characteristics of the ranging. Upon receipt of such an API call from an application, the operating system could then select a ranging mechanism from multiple ranging mechanisms, with the selection being based at least on the one or more operational characteristics requested by the application. This way, as the one or more requested operational characteristics vary from ranging request to ranging request (e.g. from application to application and/or from circumstance to circumstance), the operating system may responsively select and invoke different ranging mechanisms to help achieve different application goals.

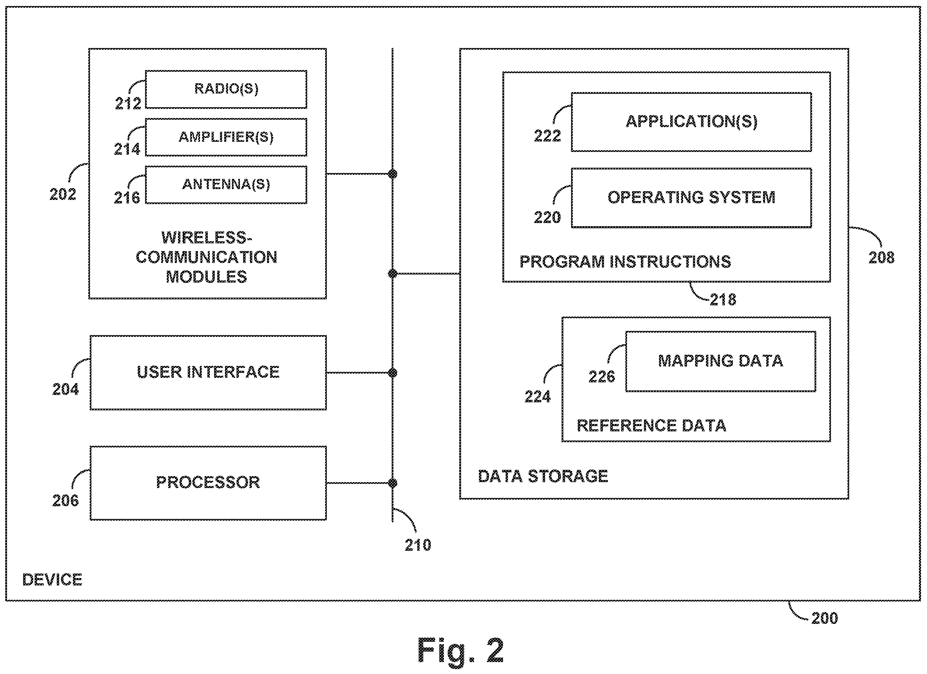

Figure 2 is a block diagram of an example device 200, showing some of the components that could be present in the device to facilitate carrying out operations described herein. Figure 2 may represent an example arrangement of device D1 and/or an example arrangement of device D2.

As shown in Figure 2, the example device 200 includes wireless-communication modules 202, a user interface 204, a processor 206, and non-transitory data storage 208, all of which could be integrated and/or communicatively linked together in various ways, such as through a system bus, network, or other connection mechanism 210.

Wireless communication modules 202 may comprise various components to facilitate wireless communication between device 200 and other entities, such as between device 200 and another device that could be the subject of ranging and/or between device 200 and a local or wide area network (e.g., a WiFi network and/or a cellular network), among other possibilities. Each wireless communication module may be configured to support communication according to a different respective air-interface protocol than each other wireless communication module and/or according to a different air-interface-protocol version or communication mechanism than each other, among other possibilities. For example, the wireless communication modules 202 may include WiFi, BLUETOOTH, UWB, and cellular (e.g., 4G, 5G, 6G, etc.) modules. Each of these modules may be individually addressable and controllable. However, one or more such modules may be collocated on a common chipset or other unit, and some of the modules may share use of one or more components.

As shown in the figure, an example wireless communication module 202 may include one or more radios 212, one or more amplifiers 214, and one or more antennas 216. The one or more radios may include one or more radio transmitters configured to modulate baseband signals onto radio frequency (RF) carriers and one or more radio receivers configured to demodulate baseband signals from one or more RF carriers. The one or more amplifiers may be configured to amplify outbound signals for transmission and/or inbound signals for processing. And the one or more antennas may be configured to transmit and/or receive RF signals. The wireless communication module 102 may further include various circuitry and/or other logic to facilitate operation according to an example air interface protocol, such as to facilitate one or more example ranging mechanisms.

The user interface 204 may comprise one or more components to facilitate interaction with a user of device 200 if applicable. For instance, the user interface 204 may include various output components such as a display screen, a sound speaker, indicator lights, and a haptic feedback interface, as well as associated circuitry and/or other logic to facilitate operation of those output components. Further, the user interface 204 may include various input components, such as a touch-screen interface integrated with the display screen, a microphone, and a keypad, as well as associated circuitry and/or other logic to facilitate operation of those input components.

The processor 206 may comprise one or more general purpose processors (e.g., one or more microprocessors, etc.) and/or one or more special-purpose processors (e.g., application-specific integrated circuits, etc.) Further, the non-transitory data storage 208 may comprise one or more volatile and/or non-volatile storage components (e.g., read only memory, random access memory, flash storage, cache memory, etc.), possibly integrated in whole or in part with the processor 206.

As shown, the data storage 208 may store program instructions 218, which may be executable by the processor 206 to carry out various operations described herein. **In** particular as shown, the program instructions 218 may represent an operating system 220 of the device and one or more applications 222 installed on the device.

**In** accordance with these program instructions 218, the operating system 220 may control various services and features of the device 200 and may manage the applications 222, providing an **API** useable by the applications to make use of the services and features. For instance, the **API** may enable the applications to submit ranging requests and to specify requested operational characteristics of the requested ranging in order to facilitate selection and invocation of suitable ranging mechanisms. To facilitate this, the operating system 220 may be configured to interwork with the one or more wireless communication modules, to trigger and/or coordinate ranging in accordance with ranging mechanisms such as one or more of those noted above, among other possibilities.

The applications 222 may in turn comprise one or more native applications and/or one or more third-party applications. Each such application may be installed on the operating system 220 and thus on the device and may be executed by having the processor 206 execute the application's instructions.

A given application may be considered to be running on the device 200 when the device is carrying out or set to carry out one or more operations in response to the program instructions of the application. Further, an application may from time to time be running in a foreground state or in a background state. An application may be in the foreground state when the application is in-focus and/or has user-perceptible activity, whether started or paused. Whereas, an application may be in the background state when the application is not in the foreground state. For instance, given multiple windows each representing applications running on the device, if a given window has focus, its application may be considered to be in a foreground state, whereas if a given window does not have focus, its application may be considered to be running a background state.

As further shown in Figure 2, the data storage 208 may also store reference data 224, which the processor 206 may access in accordance with the program instructions 218 to facilitate carrying out various device operations.

In line with the discussion above, the reference data 224 may include mapping data 226 (e.g., a mapping table and/or other logical data structure) that correlates various sets of operational characteristics respectively with various ranging mechanisms. The device may be pre-provisioned with this mapping data and/or may build the data over time, through machine learning or other techniques. By reference to such mapping data 226, the processor 206 may select a ranging mechanism in view of one or more operational characteristics that an application requests the ranging to have, so that the processor 206 can then invoke the selected ranging mechanism in response to the application's request.

In an example implementation involving machine learning, the processor may evaluate ranging performance data over time in order to programmatically establish or update correlations between particular operational characteristics and particular ranging mechanisms. For instance, the device may be pre-provisioned with an initial set of mapping data that correlates certain operational characteristics with certain ranging mechanisms, such as data indicating that certain ranging mechanisms are likely to have certain operational characteristics or certain combinations of operational characteristics. As the processor applies that mapping data over time to select ranging mechanisms that the mapping data indicates would likely have particular operational characteristics, the processor may evaluate the actually resulting operational characteristics of the selected ranging mechanisms to determine if and/or to what extent the ranging mechanisms had the operational characteristics indicated by the mapping data (effectively as a machine-learning loss function), and the device may modify the mapping data based on that evaluation.

For instance, if the mapping data indicates that a given ranging mechanism is likely to have a low level of latency, but if the device determines in practice that that ranging mechanism usually has a medium or high level of latency, the device may respond to that determination by revising the mapping data to instead indicate that the given ranging mechanism is likely to have a medium or high level of latency. Thereafter, when the device applies the mapping data, seeking to determine a ranging mechanism to select based on one or more specified operational characteristics, the device would use the updated mapping data, with improved correlations between operational characteristics and mapping data.

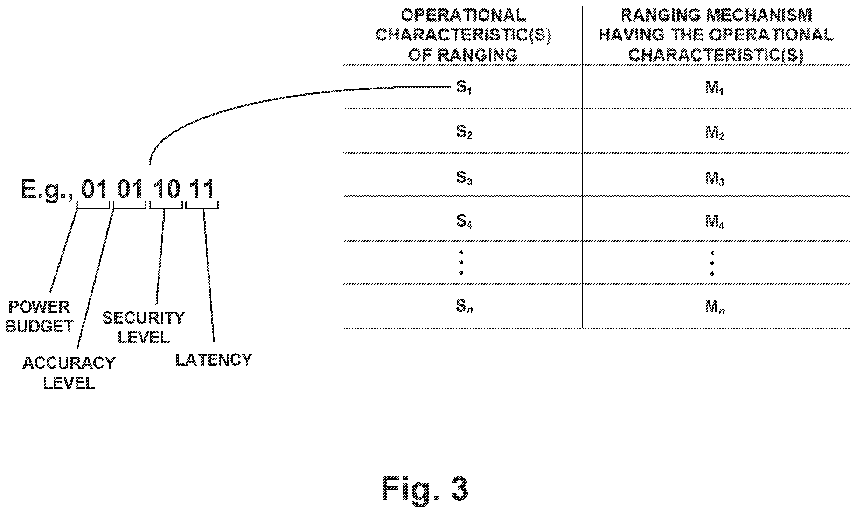

Figure 3 illustrates an example of such mapping data 226 as a representative table in which each row specifies (i) in a first column, a respective set S of operational characteristics of ranging and (ii) in a second column a ranging mechanism M deemed to correspond with the set S of the first column.

As noted in Figure 3, the example table may define each set S of operational characteristics as a bit string in which bits at predefined positions have values representing respective operational characteristics of ranging. For instance, the bit string may comprise eight bits, in which every two bits represents a low (e.g., 01), medium (e.g. 10), or high (e.g., 11) value of a respective operational characteristic or is null (e.g., 00) if that operational characteristic is not specified. By way of example, the first two bits may represent power budget, the second two bits may represent accuracy level, the third two bits may represent security level, and the fourth two bits may represent latency. Further, though not shown, the example table may define each ranging mechanism M as a respective binary code interpretable by the processor 206 to represent a particular ranging mechanism, such as use of a particular air-interface protocol for ranging and/or use of one or more particular mechanisms like those discussed above.

In an example implementation, when an application 222 seeks to have the device engage in ranging, the application may issue a ranging-request API call to the operating system 220. Further, the application may include in this API call, and thus the API call may carry, various arguments to enable the operating system 220 to process the ranging request.

For instance, the application may include in the API call an identifier associated with the other device that will be a target of the ranging, e.g., an identifier associated with D2 in the discussion above. This could be an identifier that will enable the device 200 to initiate a communication session with the other device and/or to otherwise facilitate ranging as between device 200 and the other device. For instance, this could be an account identifier of the other device or of a user of the other device.

Further, the application 222 may include in the API call a specification of one or more operational characteristics that the application requests the ranging to have. This specification could take the form of a bit string like those described above or could take another form that the operating system would interpret to represent the one or more operational characteristics being requested by the application. By way of example, the specification may specify a power budget that the application would like the ranging to have, a level of security that the application would like the ranging to have, a level of accuracy that the application would like the ranging to have, and/or a level of latency that the application would like the ranging to have. The application may be unaware of which one or more ranging mechanisms the operating system might be able to use to satisfy such requests, but the requests may enable the operating system to make a suitable selection (or to attempt to make a suitable selection).

As a specific example, if the device 200 is battery powered and an application has reason to conserve battery energy of the device (e.g., to avoid having the operating system 220 stop the application if the application uses too much battery energy), and if lower security ranging may use less battery energy, then the application may opt to request low or medium security ranging rather than high security ranging. As another example, if the application has reason to obtain very high accuracy ranging, such as if the application will use the ranging as a basis to trigger unlocking of a secure system (such as a car or house), then the application may opt to request high accuracy ranging rather than low or medium accuracy ranging.

Upon receipt of this API call from the application 222, the operating system 220 may read from the API call the identifier of the other device, and the operating system 220 may use that identifier as a basis to engage in processing to establish an initial data communication session between the device 200 and the other device, using one of the wireless communication modules 202 for instance. Through this data communication session, the operating system may exchange with the other device information about ranging capabilities of the device 200 and ranging capabilities of the other device, in an effort to establish a set of ranging mechanisms that both the device 200 and the other device support.

Further, the operating system 220 may read from the API call the specification of one or more operational characteristics that the application 222 requests the ranging to have, and the operating system 220 may use the specified one or more operational characteristics as a basis to select a ranging mechanism from the set of available ranging mechanisms (e.g., from the set of ranging mechanisms that both the device 200 and the other device support). For instance, the operating system 220 may refer to mapping data such as that described above to determine a ranging mechanism corresponding with the one or more application-requested operating characteristics.

The operating system 220 may then invoke the selected ranging mechanism, i.e., cause the device 200 to implement the selected ranging mechanism. For instance, the operating system 220 may signal to and possibly coordinate operating of a particular wireless communication module 202 to engage in the selected ranging mechanism. Through this ranging process, the operating system 220 may thus determine the distance between the device 200 and the other device and/or an angular orientation of the other device in relation to a position and orientation of the device 200. This ranging may or may not be perfect; the distance and/or angular orientation may not be exactly correct but may instead be a best effort estimate given the selected ranging mechanism and the circumstances.

As noted above, a result of this ranging may be data indicating the device 200 and the other device and/or the angular orientation of the other device in relation to a position and orientation of the device 200. The operating system 220 may return this data to the application in a response to the application's API call. The application may then make use of this data. For instance, the application may present on its user interface 204 a representation of the determined distance and/or angular orientation.

In another implementation, the operating system 220 may use the one or more application-requested operational characteristics as a basis to select more than one ranging mechanism to invoke in response to the application's request. For instance, the operating system 220 may decide, based on the one or more operational characteristics, to invoke a first ranging mechanism (e.g., a BLE-based ranging mechanism) and to use threshold proximity (closeness) detected through that mechanism as a trigger or gate for then invoke a second ranging mechanism (e.g., a UWB-based ranging mechanism), perhaps to produce refined ranging results or for one or more other purposes.

Further, in addition to considering the one or more application-requested operational characteristics, the operating system 220 may take into account one or more other factors as an additional basis to select a ranging mechanism to invoke in response to the application's request.

One example of an additional factor is the foreground or background state of the application. For instance, the operating system 220 may have data that indicates the current foreground/background state of the application and may refer to that data upon receipt of the application's ranging request and use the data as an additional basis to select a ranging mechanism. By way of example, depending on whether the application is in the foreground state or rather in the background state, the operating system 220 may filter the set of available ranging mechanisms from which the operating system 220 may then make a selection based on the one or more operational characteristics requested by the application.

As a specific example, if the operating system 220 thereby determines that the requesting application is in the foreground state rather than the background state, then, based at least on that determination, the operating system 220 may weigh its selection of a ranging mechanism in favor of one that may use more energy. Whereas, if the operating system 220 thereby determines that the requesting application is in the background state rather than the foreground state, then, based at least on that determination, the operating system 220 may weigh its selection of a ranging mechanism in favor of one that may use less energy.

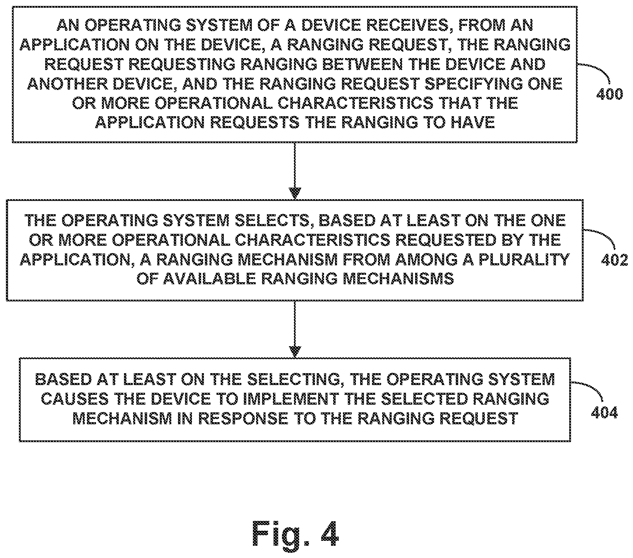

Figure 4 is a flow chart depicting an example method that could be carried out in accordance with the present disclosure, to facilitate application control over ranging.

As shown in Figure 4 at block 400, the method includes an operating system of a device receiving, from an application on the device, a ranging request, the ranging request requesting ranging between the device and another device, and the ranging request specifying one or more operational characteristics that the application requests the ranging to have. **In** addition, at block 402, the method includes the operating system selecting, based at least on the one or more operational characteristics requested by the application, a ranging mechanism from among a plurality of available ranging mechanisms. Further, at block 404, the method includes, based at least on the selecting, the operating system causing the device to implement the selected ranging mechanism in response to the ranging request.

**In** line with the discussion above, the ranging could involve determining a distance between the device and the other device and/or determining an angular orientation of the other device in relation to the device.

Further, as discussed above, the operating system may have access to mapping data that correlates ranging mechanisms with operational characteristics of ranging, in which case the act of selecting the ranging mechanism based at least on the one or more operational characteristics requested by the application may involve (i) determining, by reference to the mapping data, a given ranging mechanism that the mapping data correlates with the one or more operational characteristics and (ii) selecting as the ranging mechanism, based at least on the determining, the given ranging mechanism.

As further discussed above, examples of the one or more operational characteristics that may be requested by the application could include a power budget of the ranging and/or a security of the ranging. Further or alternatively, examples of the one or more operational characteristics that may be requested by the application could include an accuracy of the ranging and and/or a latency of the ranging.

In addition, as discussed above the act of selecting the ranging mechanism could additionally be based on a determination of whether the application is currently operating in a foreground state or rather in a background state.

Further, as discussed above, the ranging request could additionally specify an identity associated with the other device, which could facilitate the requested ranging.

As additionally discussed above, the present disclosure also contemplates a device having a processor, non-transitory data storage, and an operating system stored in the non-transitory data storage and executable by the processor, with the operating system defining program instructions executable by the processor to carry out operations such as those discussed above. Further, the present disclosure contemplates a non-transitory computer-readable medium having stored thereon an operating system defining instructions executable by a processor of a device to cause the device to carry out such operations.

In some implementations, the operating system may respond to an application's ranging request by selecting a ranging mechanism based on a determination that the selected ranging mechanism would meet or exceed the application's specified operational characteristics, based on the operating system's evaluation of past ranging requests from the application, based on resources available to the operating system, and/or based on one or more other considerations. For instance, if an application requests accurate and secure ranging every ten minutes and requests low-quality ranging every one minute, and if conditions are such that the device can freely provide accurate and secure ranging more often than every ten minutes, then the operating system may select and invoke accurate and secure ranging for the application even when the application requests low-quality ranging.

Example embodiments have been described above. Those skilled in the art will understand, however, that changes and modifications may be made to these embodiments without departing from the scope of the invention as defined by the claims.

## Claims

1. A method for application control over ranging, the method comprising:
receiving (400), by an operating system of a device, from an application on the device, a ranging request, the ranging request requesting ranging between the device and another device, and the ranging request specifying one or more operational characteristics that the application requests the ranging to have;
selecting (402), by the operating system, based at least on the one or more operational characteristics requested by the application, a ranging mechanism from among a plurality of available ranging mechanisms; and
causing (404), by the operating system, based at least on the selecting, the device to implement the selected ranging mechanism in response to the ranging request.

2. The method of claim 1, wherein the ranging comprises determining a distance between the device and the other device.

3. The method of claim 2, wherein the ranging comprises determining an angular orientation of the other device in relation to the device.

4. The method of claim 1, wherein the operating system has access to mapping data that correlates ranging mechanisms with operational characteristics of ranging, and wherein selecting the ranging mechanism based at least on the one or more operational characteristics requested by the application comprises:
determining, by reference to the mapping data, a given ranging mechanism that the mapping data correlates with the one or more operational characteristics; and
selecting as the ranging mechanism, based at least on the determining, the given ranging mechanism.

5. The method of claim 1, wherein the one or more operational characteristics requested by the application comprise at least one operational characteristic selected from the group consisting of (i) power budget of the ranging and (ii) security of the ranging.

6. The method of claim 1, wherein the one or more operational characteristics requested by the application comprise at least one operational characteristic selected from the group consisting of (i) accuracy of the ranging and (ii) latency of the ranging.

7. The method of claim 1,
wherein the selecting of the ranging mechanism is further based on a determination of whether the application is currently operating in a foreground state or rather in a background state; and/or
wherein the ranging request further specifies an identity associated with the other device, the identity facilitating the requested ranging.

8. A device (200) comprising:
a processor;
non-transitory data storage; and
an operating system (220) stored in the non-transitory data storage and executable by the processor, the operating system defining program instructions executable by the processor to carry out operations including:
receiving, from an application (222) on the device (200), a ranging request, the ranging request requesting ranging between the device (200) and another device, and the ranging request specifying one or more operational characteristics that the application (222) requests the ranging to have,
selecting, based at least on the one or more operational characteristics requested by the application (222), a ranging mechanism from among a plurality of available ranging mechanisms, and
causing, based at least on the selecting, the device (200) to implement the selected ranging mechanism in response to the ranging request.

9. The device of claim 8, wherein the ranging comprises determining a distance between the device and the other device; optionally wherein the ranging comprises determining an angular orientation of the other device in relation to the device.

10. The device of claim 8, wherein the operating system has access to mapping data that correlates ranging mechanisms with operational characteristics of ranging, and wherein selecting the ranging mechanism based at least on the one or more operational characteristics requested by the application comprises:
determining, by reference to the mapping data, a given ranging mechanism that the mapping data correlates with the one or more operational characteristics; and
selecting as the ranging mechanism, based at least one the determining, the given ranging mechanism.

11. The device of claim 8,
wherein the one or more operational characteristics requested by the application comprise at least one operational characteristic selected from the group consisting of (i) power budget of the ranging and (ii) security of the ranging; and/or
wherein the one or more operational characteristics requested by the application comprise at least one operational characteristic selected from the group consisting of (i) accuracy of the ranging and (ii) latency of the ranging.

12. The device of claim 8,
wherein the selecting of the ranging mechanism is further based on a determination of whether the application is currently operating in a foreground state or rather in a background state; and/or
wherein the ranging request further specifies an identity associated with the other device, the identity facilitating the requested ranging.

13. A non-transitory computer-readable medium having stored thereon an operating system defining instructions executable by a processor of a device to cause the device to carry out operations comprising:
receiving, from an application on the device, a ranging request, the ranging request requesting ranging between the device and another device, and the ranging request specifying one or more operational characteristics that the application requests the ranging to have;
selecting, based at least on the one or more operational characteristics requested by the application, a ranging mechanism from among a plurality of available ranging mechanisms; and
causing, based at least on the selecting, the device to implement the selected ranging mechanism in response to the ranging request.

14. The non-transitory computer-readable medium of claim 13,
wherein the ranging comprises determining at least one of a distance between the device and the other device and an angular orientation of the other device in relation to the device; and/or
wherein the one or more operational characteristics requested by the application comprise at least one operational characteristic selected from the group consisting of (i) power budget of the ranging, (ii) security of the ranging, (iii) accuracy of the ranging, and (iv) latency of the ranging.

15. The non-transitory computer-readable medium of claim 13, wherein the operating system has access to mapping data that correlates ranging mechanisms with operational characteristics of ranging, and wherein selecting the ranging mechanism based at least on the one or more operational characteristics requested by the application comprises:
determining, by reference to the mapping data, a given ranging mechanism that the mapping data correlates with the one or more operational characteristics; and
selecting as the ranging mechanism, based at least on the determining, the given ranging mechanism.

## Patentansprüche

1. Verfahren zur Anwendungssteuerung über Entfernungsmessung, wobei das Verfahren umfasst:
Empfangen (400),
durch ein Betriebssystem einer Vorrichtung, von einer Anwendung auf der Vorrichtung, einer Entfernungsmessanforderung, wobei die Entfernungsmessanforderung Entfernungsmessung zwischen der Vorrichtung und einer anderen Vorrichtung anfordert und die Entfernungsmessanforderung eine oder mehrere Betriebseigenschaften definiert, die die Anwendung für die Entfernungsmessung anfordert aufzuweisen;
Auswählen (402),
durch das Betriebssystem, zumindest basierend auf der einen oder den mehreren von der Anwendung angeforderten Betriebseigenschaften, eines Entfernungsmessmechanismus aus einer Mehrzahl von verfügbaren Entfernungsmessmechanismen; und Veranlassen (404),
durch das Betriebssystem, zumindest basierend auf dem Auswählen, dass die Vorrichtung den ausgewählten Entfernungsmessmechanismus als Reaktion auf die Entfernungsmessanforderung implementiert.

2. Verfahren nach Anspruch 1, wobei die Entfernungsmessung Bestimmen eines Abstands zwischen der Vorrichtung und der anderen Vorrichtung umfasst.

3. Verfahren nach Anspruch 2, wobei die Entfernungsmessung Bestimmen einer Winkelausrichtung der anderen Vorrichtung in Bezug auf die Vorrichtung umfasst.

4. Verfahren nach Anspruch 1, wobei das Betriebssystem Zugriff auf Zuordnungsdaten aufweist, die Entfernungsmessmechanismen mit Betriebseigenschaften der Entfernungsmessung korrelieren, und wobei Auswählen des Entfernungsmessmechanismus zumindest basierend auf der einen oder den mehreren von der Anwendung angeforderten Betriebseigenschaften umfasst:
Bestimmen, unter Bezugnahme auf die Zuordnungsdaten, eines gegebenen Entfernungsmessmechanismus, den die Zuordnungsdaten mit der einen oder den mehreren Betriebseigenschaften korrelieren; und
Auswählen, zumindest basierend auf dem Bestimmen, des gegebenen Entfernungsmessmechanismus als den Entfernungsmessmechanismus.

5. Verfahren nach Anspruch 1, wobei die eine oder die mehreren von der Anwendung angeforderten Betriebseigenschaften mindestens eine Betriebseigenschaft umfassen, ausgewählt aus der Gruppe bestehend aus (i) Leistungsbudget der Entfernungsmessung und (ii) Sicherheit der Entfernungsmessung.

6. Verfahren nach Anspruch 1, wobei die eine oder die mehreren von der Anwendung angeforderten Betriebseigenschaften mindestens eine Betriebseigenschaft umfassen, ausgewählt aus der Gruppe bestehend aus (i) Genauigkeit der Entfernungsmessung und (ii) Latenz der Entfernungsmessung.

7. Verfahren nach Anspruch 1,
wobei das Auswählen des Entfernungsmessmechanismus ferner auf einer Bestimmung basiert, ob die Anwendung derzeit in einem Vordergrundzustand oder vielmehr in einem Hintergrundzustand betrieben wird; und/oder
wobei die Entfernungsmessanforderung ferner eine der anderen Vorrichtung zugeordnete Identität definiert, wobei die Identität die angeforderte Entfernungsmessung erleichtert.

8. Vorrichtung (200) , umfassend:
einen Prozessor;
einen nichtflüchtigen Datenspeicher; und
ein Betriebssystem (220) das in dem nichtflüchtigen Datenspeicher gespeichert und durch den Prozessor ausführbar ist, wobei das Betriebssystem Programmanweisungen definiert, die durch den Prozessor ausführbar sind zum Ausführen von Operationen, beinhaltend:
Empfangen, von einer Anwendung (222) auf der Vorrichtung (200), einer Entfernungsmessanforderung, wobei die Entfernungsmessanforderung Entfernungsmessung zwischen der Vorrichtung (200) und einer anderen Vorrichtung anfordert und die Entfernungsmessanforderung eine oder mehrere Betriebseigenschaften definiert, die die Anwendung (222) für die Entfernungsmessung anfordert aufzuweisen,
Auswählen, zumindest basierend auf der einen oder den mehreren von der Anwendung (222) angeforderten Betriebseigenschaften, eines Entfernungsmessmechanismus aus einer Mehrzahl von verfügbaren Entfernungsmessmechanismen, und
Veranlassen, zumindest basierend auf dem Auswählen, dass die Vorrichtung (200) den ausgewählten Entfernungsmessmechanismus als Reaktion auf die Entfernungsmessanforderung implementiert.

9. Vorrichtung nach Anspruch 8, wobei die Entfernungsmessung Bestimmen eines Abstands zwischen der Vorrichtung und der anderen Vorrichtung umfasst; optional wobei die Entfernungsmessung Bestimmen einer Winkelausrichtung der anderen Vorrichtung in Bezug auf die Vorrichtung umfasst.

10. Vorrichtung nach Anspruch 8, wobei das Betriebssystem Zugriff auf Zuordnungsdaten aufweist, die Entfernungsmessmechanismen mit Betriebseigenschaften der Entfernungsmessung korrelieren, und wobei Auswählen des Entfernungsmessmechanismus zumindest basierend auf der einen oder den mehreren von der Anwendung angeforderten Betriebseigenschaften umfasst:
Bestimmen, unter Bezugnahme auf die Zuordnungsdaten, eines gegebenen Entfernungsmessmechanismus, den die Zuordnungsdaten mit der einen oder den mehreren Betriebseigenschaften korrelieren; und
Auswählen, zumindest basierend auf dem Bestimmen, des gegebenen Entfernungsmessmechanismus als den Entfernungsmessmechanismus.

11. Vorrichtung nach Anspruch 8,
wobei die eine oder die mehreren von der Anwendung angeforderten Betriebseigenschaften mindestens eine Betriebseigenschaft umfassen, ausgewählt aus der Gruppe bestehend aus (i) Leistungsbudget der Entfernungsmessung und (ii) Sicherheit der Entfernungsmessung; und/oder
wobei die eine oder die mehreren von der Anwendung angeforderten Betriebseigenschaften mindestens eine Betriebseigenschaft umfassen, ausgewählt aus der Gruppe bestehend aus (i) Genauigkeit der Entfernungsmessung und (ii) Latenz der Entfernungsmessung.

12. Vorrichtung nach Anspruch 8,
wobei das Auswählen des Entfernungsmessmechanismus ferner auf einer Bestimmung basiert, ob die Anwendung derzeit in einem Vordergrundzustand oder vielmehr in einem Hintergrundzustand betrieben wird; und/oder
wobei die Entfernungsmessanforderung ferner eine der anderen Vorrichtung zugeordnete Identität definiert, wobei die Identität die angeforderte Entfernungsmessung erleichtert.

13. Nichtflüchtiges computerlesbares Medium, auf dem ein Betriebssystem gespeichert ist, das durch einen Prozessor einer Vorrichtung ausführbare Anweisungen definiert, um die Vorrichtung zu veranlassen, Operationen auszuführen, umfassend:
Empfangen, von einer Anwendung auf der Vorrichtung, einer Entfernungsmessanforderung, wobei die Entfernungsmessanforderung Entfernungsmessung zwischen der Vorrichtung und einer anderen Vorrichtung anfordert und die Entfernungsmessanforderung eine oder mehrere Betriebseigenschaften definiert, die die Anwendung für die Entfernungsmessung aufzuweisen anfordert;
Auswählen, zumindest basierend auf der einen oder den mehreren von der Anwendung angeforderten Betriebseigenschaften, eines Entfernungsmessmechanismus aus einer Mehrzahl von verfügbaren Entfernungsmessmechanismen; und
Veranlassen, zumindest basierend auf dem Auswählen, der Vorrichtung, den ausgewählten Entfernungsmessmechanismus als Reaktion auf die Entfernungsmessanforderung zu implementieren.

14. Nichtflüchtiges computerlesbares Medium nach Anspruch 13, wobei die Entfernungsmessung Bestimmen von mindestens einem von einem Abstand zwischen der Vorrichtung und der anderen Vorrichtung und einer Winkelausrichtung der anderen Vorrichtung in Bezug auf die Vorrichtung umfasst; und/oder wobei die eine oder die mehreren von der Anwendung angeforderten Betriebseigenschaften mindestens eine Betriebseigenschaft umfassen, ausgewählt aus der Gruppe bestehend aus (i) Leistungsbudget der Entfernungsmessung, (ii) Sicherheit der Entfernungsmessung, (iii) Genauigkeit der Entfernungsmessung und (iv) Latenz der Entfernungsmessung.

15. Nichtflüchtiges computerlesbares Medium nach Anspruch 13, wobei das Betriebssystem Zugriff auf Zuordnungsdaten aufweist, die Entfernungsmessmechanismen mit Betriebseigenschaften der Entfernungsmessung korrelieren, und wobei Auswählen des Entfernungsmessmechanismus zumindest basierend auf der einen oder den mehreren von der Anwendung angeforderten Betriebseigenschaften umfasst:
Bestimmen, unter Bezugnahme auf die Zuordnungsdaten, eines gegebenen Entfernungsmessmechanismus, den die Zuordnungsdaten mit der einen oder den mehreren Betriebseigenschaften korrelieren; und
Auswählen, zumindest basierend auf dem Bestimmen, des gegebenen Entfernungsmessmechanismus als den Entfernungsmessmechanismus.

## Revendications

1. Procédé de contrôle d'application sur télémétrie, le procédé comprenant :
la réception (400),
par un système d'exploitation d'un dispositif, en provenance d'une application sur le dispositif, d'une demande de télémétrie, la demande de télémétrie demandant une télémétrie entre le dispositif et un autre dispositif, et la demande de télémétrie spécifiant une ou plusieurs caractéristiques opérationnelles que l'application demande à la télémétrie de présenter ;
la sélection (402),
par le système d'exploitation, sur la base au moins des une ou plusieurs caractéristiques opérationnelles demandées par l'application, d'un mécanisme de télémétrie à partir d'une pluralité de mécanismes de télémétrie disponibles ; et
le fait d'amener (404),
par le système d'exploitation, sur la base au moins de la sélection, le dispositif à mettre en œuvre le mécanisme de télémétrie sélectionné en réponse à la demande de télémétrie.

2. Procédé selon la revendication 1, dans lequel la télémétrie comprend la détermination d'une distance entre le dispositif et l'autre dispositif.

3. Procédé selon la revendication 2, dans lequel la télémétrie comprend la détermination d'une orientation angulaire de l'autre dispositif par rapport au dispositif.

4. Procédé selon la revendication 1, dans lequel le système d'exploitation a accès à des données de mise en correspondance qui mettent en corrélation les mécanismes de télémétrie avec les caractéristiques opérationnelles de télémétrie, et dans lequel la sélection du mécanisme de télémétrie sur la base au moins des une ou plusieurs caractéristiques opérationnelles demandées par l'application comprend :
la détermination, par référence aux données de mise en correspondance, d'un mécanisme de télémétrie donné que les données de mise en correspondance corrèlent avec les une ou plusieurs caractéristiques opérationnelles ; et
la sélection en tant que mécanisme de télémétrie, sur la base au moins de la détermination, du mécanisme de télémétrie donné.

5. Procédé selon la revendication 1, dans lequel les une ou plusieurs caractéristiques opérationnelles demandées par l'application comprennent au moins une caractéristique opérationnelle sélectionnée parmi le groupe constitué (i) d'un budget de puissance de la télémétrie et (ii) d'une sécurité de la télémétrie.

6. Procédé selon la revendication 1, dans lequel les une ou plusieurs caractéristiques opérationnelles demandées par l'application comprennent au moins une caractéristique opérationnelle sélectionnée parmi le groupe constitué (i) d'une précision de la télémétrie et (ii) d'une latence de la télémétrie.

7. Procédé selon la revendication 1,
dans lequel la sélection du mécanisme de télémétrie est en outre basée sur une détermination indiquant si l'application fonctionne actuellement dans un état de premier plan ou plutôt dans un état d'arrière-plan ; et/ou
dans lequel la demande de télémétrie spécifie en outre une identité associée à l'autre dispositif, l'identité facilitant la télémétrie demandée.

8. Dispositif (200) comprenant :
un processeur :
un stockage de données non transitoires ; et
un système d'exploitation (220) stocké dans le stockage de données non transitoire et exécutable par le processeur, le système d'exploitation définissant des instructions de programme exécutables par le processeur pour effectuer des opérations comportant :
la réception, en provenance d'une application (222) sur le dispositif (200), d'une demande de télémétrie, la demande de télémétrie demandant une télémétrie entre le dispositif (200) et un autre dispositif, et la demande de télémétrie spécifiant une ou plusieurs caractéristiques opérationnelles que l'application (222) demande à la télémétrie de présenter,
la sélection, sur la base au moins des une ou plusieurs caractéristiques opérationnelles demandées par l'application (222), d'un mécanisme de télémétrie à partir d'une pluralité de mécanismes de télémétrie disponibles, et
le fait d'amener, sur la base au moins de la sélection, le dispositif (200) à mettre en œuvre le mécanisme de télémétrie sélectionné en réponse à la demande de télémétrie.

9. Dispositif selon la revendication 8, dans lequel la télémétrie comprend la détermination d'une distance entre le dispositif et l'autre dispositif ; éventuellement dans lequel la télémétrie comprend la détermination d'une orientation angulaire de l'autre dispositif par rapport au dispositif.

10. Dispositif selon la revendication 8, dans lequel le système d'exploitation a accès à des données de mise en correspondance qui mettent en corrélation les mécanismes de télémétrie avec les caractéristiques opérationnelles de la télémétrie, et dans lequel la sélection du mécanisme de télémétrie sur la base au moins des une ou plusieurs caractéristiques opérationnelles demandées par l'application comprend :
la détermination, par référence aux données de mise en correspondance, d'un mécanisme de télémétrie donné que les données de mise en correspondance corrèlent avec les une ou plusieurs caractéristiques opérationnelles ; et
la sélection en tant que mécanisme de télémétrie, sur la base au moins de la détermination, du mécanisme de télémétrie donné.

11. Dispositif selon la revendication 8,
dans lequel les une ou plusieurs caractéristiques opérationnelles demandées par l'application comprennent au moins une caractéristique opérationnelle sélectionnée parmi le groupe constitué (i) d'un budget de puissance de la télémétrie et (ii) d'une sécurité de la télémétrie ; et/ou
dans lequel les une ou plusieurs caractéristiques opérationnelles demandées par l'application comprennent au moins une caractéristique opérationnelle sélectionnée parmi le groupe constitué (i) d'une précision de la télémétrie et (ii) d'une latence de la télémétrie.

12. Dispositif selon la revendication 8,
dans lequel la sélection du mécanisme de télémétrie est en outre basée sur une détermination indiquant si l'application fonctionne actuellement dans un état de premier plan ou plutôt dans un état d'arrière-plan ; et/ou
dans lequel la demande de télémétrie spécifie en outre une identité associée à l'autre dispositif, l'identité facilitant la télémétrie demandée.

13. Support non transitoire lisible par ordinateur sur lequel est stocké un système d'exploitation définissant des instructions exécutables par un processeur d'un dispositif pour amener le dispositif à effectuer des opérations comprenant :
la réception, en provenance d'une application sur le dispositif, d'une demande de télémétrie, la demande de télémétrie demandant une télémétrie entre le dispositif et un autre dispositif, et la demande de télémétrie spécifiant une ou plusieurs caractéristiques opérationnelles que l'application demande à la télémétrie de présenter ;
la sélection, sur la base au moins des une ou plusieurs caractéristiques opérationnelles demandées par l'application, d'un mécanisme de télémétrie à partir d'une pluralité de mécanismes de télémétrie disponibles ; et
le fait d'amener, sur la base au moins de la sélection, le dispositif à mettre en œuvre le mécanisme de télémétrie sélectionné en réponse à la demande de télémétrie.

14. Support non transitoire lisible par ordinateur selon la revendication 13,
dans lequel la télémétrie comprend la détermination d'au moins l'une d'une distance entre le dispositif et l'autre dispositif et d'une orientation angulaire de l'autre dispositif par rapport au dispositif ; et/ou
dans lequel les une ou plusieurs caractéristiques opérationnelles demandées par l'application comprennent au moins une caractéristique opérationnelle sélectionnée parmi le groupe constitué (i) d'un budget de puissance de la télémétrie, (ii) d'une sécurité de la télémétrie, (iii) d'une précision de la télémétrie et (iv) d'une latence de la télémétrie.

15. Support non transitoire lisible par ordinateur selon la revendication 13, dans lequel le système d'exploitation a accès à des données de mise en correspondance qui mettent en corrélation les mécanismes de télémétrie avec les caractéristiques opérationnelles de télémétrie, et dans lequel la sélection du mécanisme de télémétrie sur la base au moins des une ou plusieurs caractéristiques opérationnelles demandées par l'application comprend :
la détermination, par référence aux données de mise en correspondance, d'un mécanisme de télémétrie donné que les données de mise en correspondance corrèlent avec les une ou plusieurs caractéristiques opérationnelles ; et
la sélection en tant que mécanisme de télémétrie, sur la base au moins de la détermination, du mécanisme de télémétrie donné.
